# FASCICULE DE BREVET EUROPEEN

(11) **EP 3 507 910 B1**
(45) Date de publication et mention de la délivrance du brevet: **25.11.2020**
(21) Numéro de dépôt: 17758203.8
(22) Date de dépôt: 31.08.2017
(51) Int. Cl.: H04B 1/00, H04B 15/02, H04W 16/14, H04W 28/02, H04W 72/08, H04W 88/06

(54) **PROCÉDÉ ET DISPOSITIF DE GESTION DES INTERFACES RADIO ET PHYSIQUES D'UN ÉQUIPEMENT COMMUNICANT**
VERFAHREN UND VORRICHTUNG ZUR VERWALTUNG VON RADIO UND PHYSISCHEN SCHNITTSTELLEN EINER KOMMUNIZIERENDEN AUSRÜSTUNG
METHOD AND DEVICE FOR MANAGING RADIO AND PHYSICAL INTERFACES OF A COMMUNICATING EQUIPMENT

(30) Priorité: 05.09.2016 FR 1658224
(43) Date de publication de la demande: 10.07.2019
(73) Titulaire: Sagemcom Broadband SAS, 92500 Rueil-Malmaison (FR)
(72) Inventeur: CONTAL, Serge, 92500 Rueil-Malmaison (FR); GRAUL, Alexis, 92500 Rueil-Malmaison (FR); TRICAUD, Laurent, 92500 Rueil-Malmaison (FR)
(74) Mandataire: Cabinet Camus Lebkiri
(86) Numéro de dépôt international: PCT/EP2017/071916
(87) Numéro de publication internationale: WO 2018/041977

(56) Documents cités:
- WO-A1-2014/028802
- US-B1- 6 643 522

## Description

L'invention concerne les équipements communicants qui comprennent au moins une interface radio et au moins une interface physique, et plus précisément la gestion de ces interfaces radio et physique(s). Un exemple se trouve dans WO2014/028802.

Comme le sait l'homme de l'art, lorsque l'on connecte un périphérique à une interface physique d'un équipement communicant disposant également d'une interface radio (pour les communications par voie d'ondes), le fonctionnement de ce périphérique peut induire des interférences qui dégradent les communications radios de l'équipement communicant.

En fait, on peut constater l'apparition d'un bruit de fond s'étalant sur au moins une partie du spectre des communications radios de l'équipement communicant, et ce bruit de fond et sa localisation spectrale varient selon la fréquence de fonctionnement du périphérique connecté. Il en résulte une perturbation des échanges radios entre l'équipement communicant et chaque autre équipement communicant auquel ce dernier est temporairement couplé.

A titre d'exemple non limitatif, lorsqu'un périphérique Bluetooth, tel qu'une souris sans-fil, est couplé à une interface radio d'un ordinateur fixe ou portable, la connexion d'une clé USB 3.0 à un port USB 3.0 de ce dernier peut provoquer des problèmes de réactivité.

Il a certes été proposé de rajouter un blindage autour des périphériques et/ou sur certains composants des équipements communicants, et notamment leurs interfaces. Mais dans la pratique cela ne permet que d'atténuer légèrement la propagation du bruit environnant et de limiter légèrement les perturbations sur les canaux de communication radio. En outre, selon les périphériques et selon les équipements communicants, les blindages utilisés se révèlent être plus ou moins efficaces, et donc les perturbations peuvent être plus ou moins importantes.

L'invention a donc notamment pour but d'améliorer la situation.

Elle propose notamment à cet effet un procédé de gestion, destiné à permettre la gestion d'au moins une interface radio et d'au moins une interface physique d'un équipement communicant, et comprenant une étape dans laquelle, en cas de connexion d'un périphérique à l'interface physique :
- on détermine une cartographie de la qualité de communications radio sur l'interface radio, puis on compare cette cartographie déterminée à une autre cartographie de la qualité des communications radio sur cette interface radio en l'absence de périphérique connecté à cette interface physique, et
- en cas de dégradation de la qualité des communications radio résultant de cette connexion, on modifie une première configuration de fonctionnement en cours de l'interface radio en fonction de la cartographie déterminée ou une seconde configuration de fonctionnement en cours de l'interface physique.

Grâce à cette modification de la partie radio (émission/réception) de l'équipement communicant ou de la partie d'interface physique de l'équipement communicant on est moins gêné, voire plus gêné du tout, par les perturbations qui sont induites par la connexion du périphérique à l'interface physique

Le procédé de gestion selon l'invention peut comporter d'autres caractéristiques qui peuvent être prises séparément ou en combinaison, et notamment :
- la modification de la première configuration peut être choisie parmi (au moins) un changement de canal radio et un changement de bande radio ;
   > dans son étape, en cas d'impossibilité de changer un canal radio utilisé, on peut déterminer si l'on peut procéder à un changement d'une bande radio utilisée, et dans l'affirmative on peut procéder à ce changement de bande radio ;
- la modification de la seconde configuration peut être choisie parmi (au moins) un bridage de l'interface physique et une désactivation de l'interface physique ;
   > dans son étape, en présence de la dégradation, d'une impossibilité de modifier la première configuration et d'une priorité de fonctionnement de l'interface radio, on peut commencer par brider l'interface physique, et si cela ne permet pas d'améliorer la qualité des communications radio on peut désactiver l'interface physique ;
- une priorité de fonctionnement de l'interface radio ou de l'interface physique peut être choisie par un usager de l'équipement communicant avant la connexion du périphérique à l'interface physique ;
- avant son étape on peut déterminer la cartographie de la qualité des communications radio sur l'interface radio en l'absence de périphérique connecté à l'interface physique.

L'invention propose également un produit programme d'ordinateur comprenant un jeu d'instructions qui, lorsqu'il est exécuté par des moyens de traitement, est propre à mettre en œuvre un procédé du type de celui présenté ci-avant pour gérer au moins une interface radio et au moins une interface physique d'un équipement communicant.

L'invention propose également un dispositif de gestion, destiné à gérer au moins une interface radio et au moins une interface physique d'un équipement communicant, et comprenant :
- des moyens d'analyse propres, en cas de connexion d'un périphérique à l'interface physique, à déterminer une cartographie de la qualité de communications radio sur l'interface radio, et
- des moyens de traitement propres à comparer cette cartographie déterminée à une autre cartographie de la qualité des communications radio sur l'interface radio en l'absence de périphérique connecté à l'interface physique, et, en cas de dégradation de la qualité des communications radio résultant de cette connexion, à déclencher une modification d'une première configuration de fonctionnement en cours de l'interface radio en fonction de la cartographie déterminée ou une seconde configuration de fonctionnement en cours de l'interface physique.

L'invention propose également un équipement communicant comprenant au moins une interface radio, au moins une interface physique, et un dispositif de gestion du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique et fonctionnelle un exemple d'équipement communicant comprenant une interface radio, une interface physique et un dispositif de gestion selon l'invention,
- la figure 2 illustre un exemple d'algorithme mettant en œuvre un procédé de gestion selon l'invention, et
- la figure 3 illustre un exemple d'algorithme mettant en œuvre une phase de modification de configuration d'un procédé de gestion selon l'invention.

L'invention a notamment pour but de proposer un procédé de gestion, et un dispositif de gestion associé, destinés à permettre la gestion d'au moins une interface radio IR et d'au moins une interface physique IP d'un équipement communicant EC, afin de limiter autant que possible les perturbations induites sur les communications radio via l'interface radio IR par un périphérique PE connecté à une interface physique IP.

Dans ce qui suit, on considère, à titre d'exemple non limitatif, que l'équipement communicant EC est un ordinateur portable (ou « laptop »). Mais l'invention n'est pas limitée à ce type d'équipement communicant EC. Elle concerne en effet tout type d'équipement communicant EC comprenant au moins une interface radio lui permettant de communiquer par voie d'ondes avec au moins un autre équipement communicant, et au moins une interface physique à laquelle peut être connecté un périphérique. Par conséquent, elle concerne également et notamment les ordinateurs fixes, les récepteurs de contenus multimédia (éventuellement de type « Personal Video Recorder Set Tob Box » (ou PVR STB)), les passerelles de communication (ou « gateways ») de type domestique ou résidentiel, les routeurs, les serveurs, les stations de base, les « femtocells », les imprimantes, les téléphones mobiles (éventuellement de type intelligent (ou « smartphone »)), les consoles de jeux, les vidéoprojecteurs, les caméras, les appareils photographiques, les Smart TV et les appareils de test et de mesure.

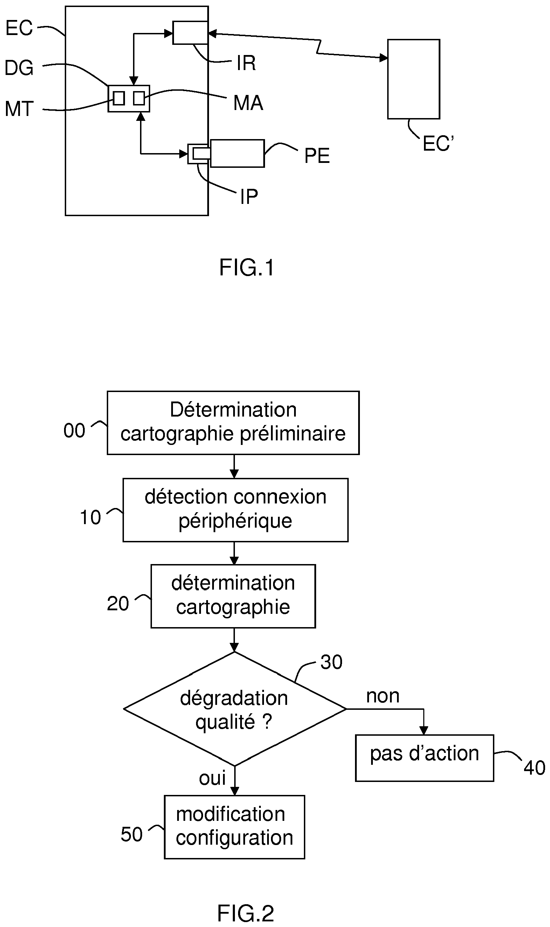

On a schématiquement illustré sur la figure 1 un exemple de réalisation d'un équipement communicant EC comprenant une interface radio IR, une interface physique IP et un dispositif de gestion DG selon l'invention. On notera que l'équipement communicant EC pourrait comprendre plusieurs (au moins deux) interfaces radio IR et/ou plusieurs (au moins deux) interfaces physiques IP.

L'interface radio IR permet à l'équipement communicant EC (ici un ordinateur portable) de communiquer par voie d'ondes avec au moins un autre équipement communicant EC'. Ce dernier (EC') peut, par exemple, être une souris sans fil, un récepteur de contenus multimédia (éventuellement de type PVR STB), une passerelle de communication domestique ou résidentielle, un routeur, un serveur, une station de base, une femtocell, une imprimante, un téléphone mobile, une console de jeux, un vidéoprojecteur, une caméra, un appareil photographique, une Smart TV ou un appareil de test et de mesure.

L'interface physique IP permet la connexion (physique) d'un périphérique PE à l'équipement communicant EC (ici un ordinateur portable). Ce périphérique PE peut, par exemple, être une clé USB (éventuellement de type 3.0), ou une souris filaire ou un disque dur Sata, une carte d'extension PCI-E, un câble HDMI, une clé 4G, un contrôleur de jeu sans fil et son adaptateur USB associé.

Comme évoqué précédemment, l'invention propose un procédé de gestion destiné à permettre la gestion des interface(s) radio IR et interface(s) physique(s) IP de l'équipement communicant EC, afin de limiter autant que possible les perturbations induites sur les communications radio avec l'autre équipement communicant EC' via l'interface radio IR par le périphérique PE qui est connecté à une interface physique IP.

Un tel procédé peut être mis en œuvre au moins partiellement par le dispositif de gestion DG qui équipe l'équipement communicant EC et qui comprend des moyens d'analyse MA et des moyens de traitement MT. Dans l'exemple non limitatif illustré sur la figure 1, le dispositif de gestion DG fait avantageusement partie de l'équipement communicant EC. Mais cela n'est pas obligatoire. En effet, et bien que cela ne soit pas préféré, il pourrait être connecté à l'équipement communicant EC. Par conséquent, le dispositif de gestion DG peut être réalisé sous la forme de modules logiciels (ou informatiques ou encore « software »), ou bien d'une combinaison de circuits électroniques (ou « hardware ») et de modules logiciels.

Un procédé de gestion, selon l'invention, comprend une étape qui est mise en œuvre chaque fois qu'un périphérique PE est connecté (physiquement) à l'interface physique IP de l'équipement communicant EC

Dans cette étape, on commence par déterminer une cartographie cs1 de la qualité des communications radio sur l'interface radio IR, puis on compare cette cartographie cs1 déterminée à une autre cartographie cs2 de la qualité des communications radio sur cette interface radio IR en l'absence de périphérique PE connecté à l'interface physique IP.

On comprendra que ce sont les moyens d'analyse MA qui sont agencés pour déterminer la cartographie cs1, et que ce sont les moyens de traitement MT qui sont agencés pour comparer cette cartographie cs1 déterminée à l'autre cartographie cs2.

Chaque cartographie cs1, cs2 est par exemple représentative du bruit de fond et/ou du débit sur chaque bande de fréquences utilisable par l'équipement communicant EC en émission/réception, en fonction de la fréquence.

On notera que l'on peut déterminer avant l'étape du procédé de gestion la cartographie cs2 de la qualité des communications radio sur l'interface radio IR en l'absence de périphérique PE connecté à l'interface physique IP. Pour ce faire, les moyens d'analyse MA peuvent utiliser la même méthode que celle qu'ils utilisent pour déterminer la cartographie cs1. Mais en variante la cartographie cs2 pourrait être prédéterminée par le fabricant de l'équipement communicant EC et stockée dans ce dernier (EC) ou dans le dispositif de gestion DG.

On notera qu'en fonctionnement normal des équipements communicants EC et EC', les communications radio sont actives, le débit est connu et généralement le niveau de bruit des bandes (de fréquences) radio utiles est connu.

L'obtention d'une cartographie cs1 ou cs2 dépend du type du protocole de communication utilisé. Par exemple, pour une communication WiFi, cette obtention peut être réalisée par un balayage du spectre de fréquences utiles grâce au RSSI (« Received Signal Strength Indication » - mesure de la puissance en réception d'un signal reçu), ou bien grâce à la connaissance de la modulation et du débit (fonctions du type « get_RSSI » ou « get_Rate » ou commandes pilotes propriétaires comme par exemple « wl rssi » dans le cas du fabricant Broadcom)). Pour le WiFi, on peut par exemple considérer qu'un canal inactif est pollué lorsque son RSSI est supérieur à -90 dBm sur 20 MHz. Si le RSSI est supérieur à cette valeur, cela signifie que du bruit se situe dans la bande radio et va réduire le rapport signal sur bruit. Par exemple, la plus faible sensibilité dans le cas de la norme 802.11ac est égale à -82 dBm en MCS0 à 20 MHz de bande passante. Par conséquent, sachant que le PAPR (« Peak-to-Average Power Ratio » - facteur de crête (rapport entre l'amplitude du pic du signal et la valeur efficace du signal)) est de l'ordre de 10 dB, un bruit à -90 dBm dégrade le signal reçu.

De plus, la plupart des circuits intégrés disposent d'outils internes permettant de balayer l'environnement radio (c'est notamment le cas de l'outil ACS pour le fabricant Broadcom, et de l'outil SCS pour le fabricant Quantenna). Ces outils peuvent partager en temps réel des statistiques sur l'occupation d'un canal et également sur le bruit de fond grâce à une commande propriétaire (comme par exemple « acs_cli chanim » dans le cas du fabricant Broadcom).

Pour une communication LTE (« Long Term Evolution »), le balayage du spectre peut être fait grâce au RTWP (« Received Total Wideband Power »).

La détection de trafic peut se faire à l'aide de fonctions distribuées avec le pilote qui gère la communication radio. Dans le cas d'une communication WiFi, la fonction distribuée peut, par exemple et pour le fabricant Broadcom, être la statistique « Data (Mbps) » qui est obtenue à l'aide de la commande « wl bs_data ».

Si aucune communication n'est active, on peut effectuer un balayage sur la bande radio utile pour mesurer le RSSI sur les canaux radio.

Ensuite dans l'étape du procédé, en cas de dégradation de la qualité des communications radio résultant de la connexion du périphérique PE, on modifie une première configuration de fonctionnement en cours cf1 de l'interface radio IR en fonction de la cartographie cs1 déterminée ou une seconde configuration de fonctionnement en cours cf2 de l'interface physique IP.

En d'autres termes, grâce à l'invention on va modifier soit la partie radio (émission/réception) de l'équipement communicant EC, soit la partie d'interface physique IP de l'équipement communicant EC, afin d'être le moins possible gêné par les perturbations induites par la connexion du périphérique PE à cette interface physique IP.

On comprendra que ce sont les moyens de traitement MT qui sont agencés pour déterminer la modification devant être apportée à la première configuration cf1 et pour déclencher la réalisation de cette modification.

Par exemple, la modification de la première configuration cf1 peut être choisie parmi au moins un changement de canal radio au niveau de l'interface radio IR et un changement de bande (de fréquences) radio au niveau de l'interface radio IR. Pour procéder à l'un ou l'autre changement, il faut préalablement que l'équipement communicant EC le négocie, à la requête du dispositif de gestion DG, avec l'autre équipement communicant EC' avec lequel il communique via son interface radio IR.

Lorsque l'on peut effectuer les deux changements mentionnés dans le paragraphe précédent, on (les moyens de traitement MT) peu(ven)t, par exemple, commencer par déterminer si le canal radio qui est utilisé par l'interface radio IR (et qui est perturbé) peut être changé en fonction de la cartographie cs1 déterminée. Dans ce cas, dans l'étape du procédé, en cas d'impossibilité de changer le canal radio utilisé, on les moyens de traitement MT) peu(ven)t, par exemple, déterminer si l'on (s'ils) peu(ven)t procéder à un changement de la bande radio utilisée en fonction de la cartographie cs1 déterminée, et dans l'affirmative on (les moyens de traitement MT) procède(nt) à ce changement de bande radio.

En d'autres termes, si l'on peut changer le canal radio (au regard de cs1) on le fait, sinon on essaie de changer la bande radio utilisée. Et, si on ne peut pas non plus changer la bande radio utilisée (au regard de cs1), on peut, par exemple, déterminer une modification de la seconde configuration cf2 de l'interface physique IP.

La détermination d'un autre canal radio disponible et moins dégradé peut, par exemple, se faire en contrôlant un outil tel qu'ACS dans le cas du fabricant Broadcom, lequel va sélectionner de façon autonome le meilleur canal radio disponible. En variante, on peut, après avoir comparé cs1 à cs2, sélectionner le canal radio qui dispose du meilleur RSSI au-dessus d'un seuil minimum requis (par exemple -90 dBm / 20 Mhz), puis effectuer un changement de canal radio en utilisant une commande telle que « wl -i <interface> chanspec » qui permet de changer de canal radio sur un circuit intégré du fabricant Broadcom.

Pour déterminer si l'équipement communicant EC' peut passer sur une autre bande radio, on peut, par exemple, utiliser une technique telle que le pilotage de bande (ou « band steering » - technologie qui détecte si un équipement communicant EC' est compatible ou non avec une bi-bande, et qui, dans l'affirmative, le pousse à se connecter à l'autre bande radio). A cet effet, on peut détecter des « probe requests » sur chacune des bandes radio utilisables, et en déduire si l'équipement communicant EC' est bi-bande ou non. Par exemple, grâce à une fonction telle que « send_event_to_sgc_wifiradio_socket() » on peut remonter chaque événement (ou probe request) depuis le pilote indiquant sur quelle bande et pour quelle adresse MAC on a reçu la probe request. Cela oblige à maintenir une liste des équipements communicants EC' bi-bande qui peuvent supporter un changement de bande radio. Si ces équipements communicants EC' supportent la norme 802.11v, on peut, par exemple, leur envoyer des paquets de type « BSS Transition » grâce à une commande telle que « wnm_bsstrans_req », puis on peut déconnecter de la bande radio dégradée initiale les équipements communicants EC' grâce à une commande telle que « deauthenticate ». Pour éviter que les équipements communicants EC' reviennent sur la bande radio dégradée initiale, on peut, par exemple, les placer dans une « liste noire » associée à cette bande radio dégradée initiale. On les retire ensuite de cette liste noire une fois qu'ils sont connectés à l'autre bande radio.

Par exemple, la modification de la seconde configuration cf2 peut être choisie parmi au moins un bridage de l'interface physique IP et une désactivation de l'interface physique IP. Le bridage est par exemple destiné à faire fonctionner le périphérique PE à une fréquence qui est différente (par exemple inférieure) à sa fréquence de fonctionnement habituelle, afin qu'il induise une moindre perturbation.

Ainsi, dans le cas d'une clé USB 3.0 on peut brider l'interface physique IP afin qu'elle ne fonctionne plus qu'en 2.0. Par exemple, dans un environnement de type Linux on peut forcer une interface USB 3.0 à fonctionner en USB 2.0 à l'aide de la commande « setpci -H1 -d [<vendor>]:[<device>] d0.I=0 ».

A l'aide d'une couche d'abstraction matérielle, l'équipement communicant EC peut alors changer la configuration de fonctionnement cf2 de son interface physique IP.

La désactivation de l'interface physique IP, à laquelle est connecté le périphérique PE, a pour conséquence de supprimer la perturbation (ou dégradation) induite par ce périphérique PE. Mais bien entendu elle empêche temporairement l'utilisation de ce dernier (PE).

Par exemple, dans un environnement de type Linux on peut désactiver un périphérique PE de type clé USB au moyen de commandes telles que « echo disabled > /sys/bus/usb/devices/usb1/power/wakeup » et « echo suspend > /sys/bus/usb/devices/usb1/power/level ».

On notera que dans l'étape du procédé, en présence de la dégradation induite par le périphérique PE, d'une impossibilité de modifier la première configuration cf1 et d'une priorité de fonctionnement de l'interface radio IR par rapport à l'interface physique IP, on peut commencer par brider cette interface physique IP, et si cela ne permet pas d'améliorer la qualité des communications radio on peut désactiver cette interface physique IP.

En d'autres termes, si l'on peut brider l'interface physique IP on le fait, sinon on désactive cette interface physique IP. Et, par exemple, si le périphérique PE est déconnecté de l'interface physique IP désactivée, on peut ensuite réactiver cette dernière (IP) et la replacer dans sa seconde configuration cf2 initiale. Pour réaliser ce dernier replacement on peut, par exemple, utiliser des commandes telles que « echo enabled > /sys/bus/usb/devices/usb1/power/wakeup » et « echo on > /sys/bus/usb/devices/usb1/power/level".

On comprendra que ce sont les moyens de traitement MT qui sont agencés pour déclencher le bridage et/ou la désactivation de l'interface physique IP.

On notera également qu'une priorité de fonctionnement de l'interface radio IR ou de l'interface physique IP peut, par exemple, être choisie par un usager de l'équipement communicant EC avant la connexion du périphérique PE à l'interface physique IP. Pour ce faire, si l'équipement communicant EC dispose d'un écran d'affichage et d'une interface homme/machine de contrôle et sélection, l'usager peut sélectionner un sous-menu dédié à la gestion qui est alors affiché sur l'écran et dans lequel le dispositif de gestion DG lui propose de choisir soit la priorité de fonctionnement de l'interface radio IR soit la priorité de fonctionnement de l'interface physique IP.

De préférence, l'usager peut à tout moment changer sa priorisation, par exemple de manière à rendre le périphérique PE prioritaire sur les communications radio, afin de l'utiliser.

On a schématiquement illustré sur la figure 2 un exemple d'algorithme mettant en œuvre un exemple non limitatif de procédé de gestion selon l'invention.

Cet algorithme comprend une sous-étape 00 préliminaire dans laquelle on (les moyens d'analyse MA) déterminent la cartographie cs2 de la qualité des communications radio sur l'interface radio IR en l'absence de périphérique PE connecté à l'interface physique IP.

L'algorithme se poursuit par une sous-étape 10 dans laquelle on détecte la connexion du périphérique PE à l'interface physique IP. Cette détection peut être réalisée par le dispositif de gestion DG, ou bien par l'équipement communicant EC qui en informe immédiatement le dispositif de gestion DG. Dans cette seconde alternative une notification peut, par exemple, être envoyée au middleware de l'équipement communicant EC via un bus de communication propriétaire et une fonction de type « callback onAddDev() » peut alors être appelée dans le module USB-SMU. Le module USB-SMU est un module logiciel propriétaire de la société Sagemcom qui gère les ports USB/Sata des gateways (passerelles). Le module USB-SMU est donc un module de gestion des périphériques tels que USB, SATA...

L'algorithme se poursuit par une sous-étape 20 dans laquelle on (les moyens d'analyse MA) déterminent la cartographie cs1 de la qualité des communications radio sur l'interface radio IR en présence du périphérique PE connecté à l'interface physique IP.

Puis, dans une sous-étape 30, on (les moyens de traitement MT) effectue(nt) un test pour déterminer si la connexion détectée a induit une dégradation notable de la qualité des communications radio via l'interface radio IR. Cette détermination se fait en comparant la cartographie cs1 déterminée dans la sous-étape 20 à la cartographie cs2 déterminée dans la sous-étape 00 préliminaire.

En l'absence de dégradation notable, on (les moyens de traitement MT) décide(nt), dans une sous-étape 40, de ne pas agir (c'est-à-dire de ne procéder ni à une modification de la première configuration cf1 de l'interface radio IR, ni à une modification de la seconde configuration cf2 de l'interface physique IP).

En revanche, en présence d'une dégradation notable, on (les moyens de traitement MT) décide(nt), dans une sous-étape 50, d'agir (c'est-à-dire de procéder à une modification de la première configuration cf1 de l'interface radio IR ou à une modification de la seconde configuration cf2 de l'interface physique IP).

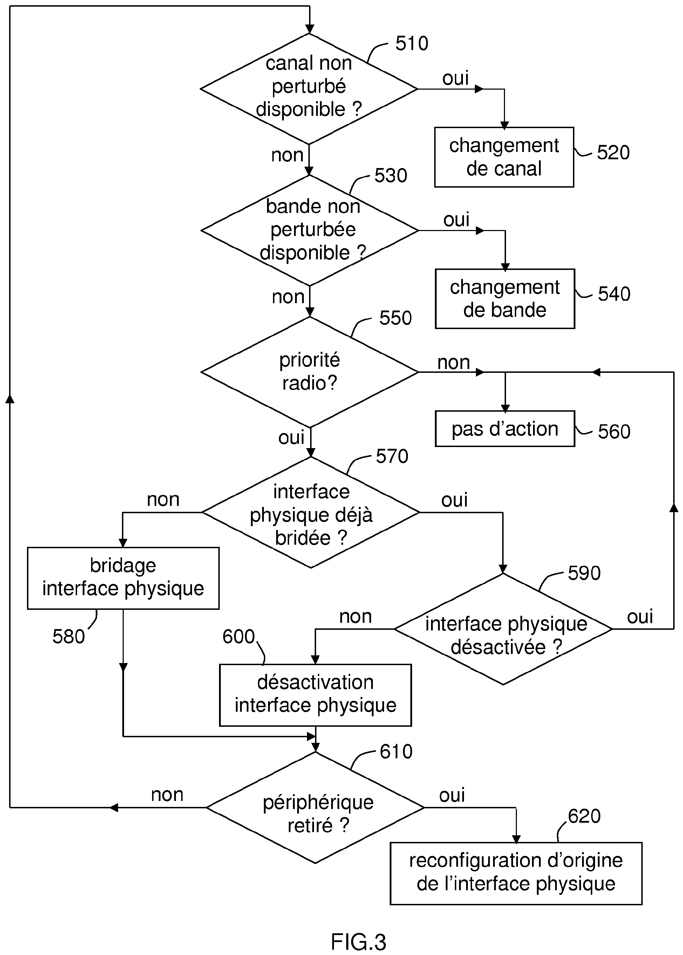

On a schématiquement illustré sur la figure 3 un exemple d'algorithme mettant en œuvre un exemple de sous-étape 50 du procédé de gestion selon l'invention.

Cet algorithme comprend une sous-étape 510 dans laquelle on (les moyens de traitement MT) effectue(nt) un test pour déterminer si le canal radio perturbé (utilisé par l'interface radio IR) peut être changé, en fonction de la cartographie cs1 déterminée dans la sous-étape 20. En d'autres termes on (ils) détermine(nt) dans la cartographie cs1 s'il existe un autre canal radio disponible et moins perturbé (ou dégradé) pour l'interface IR.

Dans l'affirmative (oui), on (les moyens de traitement MT) détermine(nt) dans une sous-étape 520 si cet autre canal radio peut être accepté par l'équipement communicant EC', et dans l'affirmative impose(nt) cet autre canal radio à l'interface radio IR.

Dans la négative (non), on (les moyens de traitement MT) effectue(nt) un test dans une sous-étape 530 pour déterminer si la bande (de fréquences) radio perturbée (utilisée par l'interface radio IR) peut être changée, en fonction de la cartographie cs1 déterminée dans la sous-étape 20. En d'autres termes on (ils) détermine(nt) dans la cartographie cs1 s'il existe une autre bande radio disponible et moins perturbée (ou dégradée) pour l'interface radio IR.

Dans l'affirmative (oui), on (les moyens de traitement MT) détermine(nt) dans une sous-étape 540 si cette autre bande radio peut être acceptée par l'équipement communicant EC', et dans l'affirmative impose(n) cette autre bande radio à l'interface IR.

Dans la négative (non), on (les moyens de traitement MT) effectue(nt) un test dans une sous-étape 550 pour déterminer si une priorité radio a été préalablement choisie (par exemple par l'usager de l'équipement communicant EC).

Dans la négative (non), cela signifie que l'usager considère que c'est l'utilisation de l'interface physique IP (et donc du périphérique PE) qui est prioritaire, et par conséquent, dans une sous-étape 560 on (les moyens de traitement MT) décide(nt) de ne pas agir.

Dans l'affirmative (oui), on (les moyens de traitement MT) effectue(nt) un test dans une sous-étape 570 pour déterminer s'il est possible de brider l'interface physique IP afin de réduire (voire supprimer) la dégradation induite par le périphérique PE et ainsi améliorer la qualité des communications radio.

Dans l'affirmative (oui), on (les moyens de traitement MT) impose(nt) ce bridage à l'interface physique IP dans une sous-étape 580, puis passe(nt) à une sous-étape 610 décrite plus loin.

Dans la négative (non), on (les moyens de traitement MT) effectue(nt) un test dans une sous-étape 590 pour déterminer si l'interface physique IP a été désactivée.

Dans l'affirmative (oui), on (les moyens de traitement MT) considère(nt) qu'il n'y a rien à faire et donc dans une sous-étape 560 décide(nt) de ne pas agir.

Dans la négative (non), on (les moyens de traitement MT) désactive(nt) l'interface physique IP dans une sous-étape 600 puisqu'elle n'est pas prioritaire pour l'usager. Puis, dans une sous-étape 610 on (les moyens de traitement MT) effectue(nt) un test pour déterminer si le périphérique PE a été déconnecté de l'interface physique IP par l'usager.

Dans l'affirmative (oui), on (les moyens de traitement MT) considère(nt) dans une sous-étape 620 qu'en l'absence périphérique PE les communications radio via l'interface radio IR ne sont plus dégradées, et donc réactive(nt) l'interface physique IP et la replace(nt) dans sa seconde configuration cf2 initiale.

Dans la négative (non), on (les moyens de traitement MT) effectue(nt) de nouveau la sous-étape 510.

On notera que l'invention peut être également considérée sous la forme d'un produit programme d'ordinateur comprenant un jeu d'instructions qui, lorsqu'il est exécuté par des moyens de traitement (par exemple de type processeur ou CPE) d'un équipement communicant EC, est propre à mettre en œuvre un procédé de gestion du type de celui décrit ci-avant pour gérer au moins une interface radio IR et au moins une interface physique IP de cet équipement communicant EC.

## Revendications

1. Procédé de gestion d'au moins une interface radio (IR) et d'au moins une interface physique (IP) d'un équipement communicant (EC), **caractérisé en ce qu'**il comprend une étape dans laquelle, en cas de connexion d'un périphérique (PE) à ladite interface physique (IP), on détermine une cartographie de la qualité de communications radio sur ladite interface radio (IR), puis on compare cette cartographie déterminée à une autre cartographie de la qualité des communications radio sur ladite interface radio (IR) en l'absence de périphérique (PE) connecté à ladite interface physique (IP), et, en cas de dégradation de ladite qualité des communications radio résultant de ladite connexion, on modifie une première configuration de fonctionnement en cours de ladite interface radio (IR) en fonction de ladite cartographie déterminée ou une seconde configuration de fonctionnement en cours de ladite interface physique (IP).

2. Procédé selon la revendication 1, **caractérisé en ce que** ladite modification de la première configuration est choisie dans un groupe comprenant un changement de canal radio et un changement de bande radio.

3. Procédé selon la revendication 2, **caractérisé en ce que** dans ladite étape, en cas d'impossibilité de changer un canal radio utilisé, on détermine si l'on peut procéder à un changement d'une bande radio utilisée, et dans l'affirmative on procède à ce changement de bande radio.

4. Procédé selon l'une des revendications 1 à 3, **caractérisé en ce que** ladite modification de la seconde configuration est choisie dans un groupe comprenant un bridage de ladite interface physique (IP) et une désactivation de ladite interface physique (IP).

5. Procédé selon la revendication 4, **caractérisé en ce que** dans ladite étape, en présence de ladite dégradation, d'une impossibilité de modifier ladite première configuration et d'une priorité de fonctionnement de ladite interface radio (IR), on commence par brider ladite interface physique (IP), et si cela ne permet pas d'améliorer ladite qualité des communications radio on désactive ladite interface physique (IP).

6. Procédé selon l'une des revendications 1 à 5, **caractérisé en ce qu'**une priorité de fonctionnement de ladite interface radio (IR) ou de ladite interface physique (IP) est choisie par un usager dudit équipement communicant (EC) avant ladite connexion du périphérique (PE) à ladite interface physique (IP).

7. Procédé selon l'une des revendications 1 à 6, **caractérisé en ce que** l'on détermine avant ladite étape ladite cartographie de la qualité des communications radio sur ladite interface radio (IR) en l'absence de périphérique (PE) connecté à ladite interface physique (IP).

8. Produit programme d'ordinateur comprenant un jeu d'instructions qui, lorsqu'il est exécuté par des moyens de traitement, est propre à mettre en œuvre le procédé selon l'une des revendications 1 à 7 pour gérer au moins une interface radio (IR) et au moins une interface physique (IP) d'un équipement communicant (EC).

9. Dispositif (DG) de gestion d'au moins une interface radio (IR) et d'au moins une interface physique (IP) d'un équipement communicant (EC), **caractérisé en ce qu'**il comprend des moyens d'analyse (MA) propres, en cas de connexion d'un périphérique (PE) à ladite interface physique (IP), à déterminer une cartographie de la qualité de communications radio sur ladite interface radio (IR), et des moyens de traitement (MT) propres à comparer cette cartographie déterminée à une autre cartographie de la qualité des communications radio sur ladite interface radio (IR) en l'absence de périphérique (PE) connecté à ladite interface physique (IP), et, en cas de dégradation de ladite qualité des communications radio résultant de ladite connexion, à déclencher une modification d'une première configuration de fonctionnement en cours de ladite interface radio (IR) en fonction de ladite cartographie déterminée ou une seconde configuration de fonctionnement en cours de ladite interface physique (IP).

10. Equipement communicant (EC) comprenant au moins une interface radio (IR) et au moins une interface physique (IP), **caractérisé en ce qu'**il comprend en outre un dispositif de gestion (DG) selon la revendication 9.

## Patentansprüche

1. Verwaltungsverfahren wenigstens einer Funk-Schnittstelle (IR) und wenigstens einer physischen Schnittstelle (IP) einer Kommunikationsausrüstung (EC), **dadurch gekennzeichnet, dass** es einen Schritt umfasst, in dem bei einem Anschluss eines Peripheriegeräts (PE) an der genannten physischen Schnittstelle (IP) eine Kartographie der Qualität der Funkkommunikationen an der genannten Funk-Schnittstelle (IR) bestimmt wird, dann diese bestimmte Kartographie mit einer anderen Kartographie der Qualität der Funkkommunikationen an der genannten Funk-Schnittstelle (IR) bei Fehlen eines Peripheriegeräts (PE), das an der genannten physischen Schnittstelle (IP) angeschlossen ist, verglichen wird, und bei einer Verschlechterung der genannten Qualität der Funkkommunikationen, die aus dem genannten Anschluss resultieren, wird eine erste laufende Betriebsausgestaltung der genannten Funk-Schnittstelle (IR) in Abhängigkeit von der genannten bestimmten Kartographie oder eine zweite laufende Betriebsausgestaltung der genannten physischen Schnittstelle (IP) abgeändert.

2. Verfahren gemäß Anspruch 1, **dadurch gekennzeichnet, dass** die genannte Änderung der ersten Ausgestaltung aus einer Gruppe ausgewählt ist, umfassend eine Änderung des Funkkanals und eine Änderung des Funkbandes.

3. Verfahren gemäß Anspruch 2, **dadurch gekennzeichnet, dass** bei dem genannten Schritt im Falle der Unmöglichkeit der Änderung eines verwendeten Funkkanals bestimmt wird, ob eine Änderung eines verwendeten Funkbandes durchgeführt werden kann und falls ja, wird diese Änderung des Funkbandes durchgeführt.

4. Verfahren gemäß einem der Ansprüche 1 bis 3, **dadurch gekennzeichnet, dass** die genannte Abänderung der zweiten Ausgestaltung aus einer Gruppe ausgewählt ist, umfassend ein Drosseln der genannten physischen Schnittstelle (IP) und eine Deaktivierung der genannten physischen Schnittstelle (IP).

5. Verfahren gemäß Anspruch 4, **dadurch gekennzeichnet, dass** in dem genannten Schritt bei Vorhandensein der genannten Verschlechterung im Fall der Unmöglichkeit der Abänderung der genannten ersten Ausgestaltung und einer Betriebsvorrangigkeit der genannte Funk-Schnittstelle (IR) mit dem Drosseln der genannten physischen Schnittstelle (IP) begonnen wird und wenn das nicht die Verbesserung der genannten Qualität der Funckommunikationen ermöglicht, wird die genannte physische Schnittstelle (IP) deaktiviert.

6. Verfahren gemäß einem der Ansprüche 1 bis 5, **dadurch gekennzeichnet, dass** eine Betriebsvorrangigkeit der genannten Funk-Schnittstelle (IR) oder der genannten physischen Schnittstelle (IP) von einem Nutzer der genannten Kommunikationsausrüstung (EC) vor dem genannten Anschluss des Peripheriegeräts (PE) an die genannte physische Schnittstelle ausgewählt wird.

7. Verfahren gemäß einem der Ansprüche 1 bis 6, **dadurch gekennzeichnet, dass** vor dem genannten Schritt die genannte Kartographie der Qualität der Funkkommunikationen an der genannten Funk-Schnittstelle (IR) bei Fehlen eines Peripheriegeräts (PE) bestimmt wird, das an die genannte physische Schnittstelle (IP) angeschlossen ist.

8. Computerprogramm-Produkt, umfassend einen Anweisungssatz, der, wenn er von Verarbeitungsmitteln ausgeführt ist, geeignet ist, das Verfahren gemäß einem der Ansprüche 1 bis 7 umzusetzen, um wenigstens eine Funk-Schnittstelle (IR) und wenigstens eine physische Schnittstelle (IP) einer Kommunikationsausrüstung (EC) zu verwalten.

9. Verwaltungsvorrichtung (DG) wenigstens einer Funk-Schnittstelle (IR) und wenigstens einer physischen Schnittstelle (IP) einer Kommunikationsausrüstung (EC), **dadurch gekennzeichnet, dass** sie Analysemittel (MA), die bei einem Anschluss eines Peripheriegeräts (PE) an die genannte physische Schnittstelle (IP) geeignet sind, eine Kartographie der Qualität der Funckommunikationen an der genannten Funk-Schnittstelle (IR) zu bestimmen, und Verarbeitungsmittel (MT), die geeignet sind, diese bestimmte Kartographie mit einer anderen Kartographie der Qualität des Funkkommunikationen an der genannten Funk-Schnittstelle (IR) bei Fehlen eines Peripheriegeräts, das an die genannte physische Schnittstelle (IP) angeschlossen ist, zu vergleichen, und im Fall einer Verschlechterung der genannten Qualität der Funkkommunikationen, die aus dem genannten Anschluss resultieren, eine Abänderung einer ersten laufenden Betriebsausgestaltung der genannten Funk-Schnittstelle (IR) in Abhängigkeit von der genannten bestimmten Kartographie oder einer zweiten laufenden Betriebsausgestaltung der genannten physischen Schnittstelle (IP) auszulösen, umfasst.

10. Kommunikationsausrüstung (EC), umfassend wenigstens eine Funk-Schnittstelle (IR) und wenigstens eine physische Schnittstelle (IP), **dadurch gekennzeichnet, dass** sie darüber hinaus eine Verwaltungsvorrichtung (EG) gemäß Anspruch 9 umfasst.

## Claims

1. A method for managing at least one radio interface (IR) and at least one physical interface (IP) of a communicating equipment (EC), **characterised in that** it comprises a step in which, in case of a connection of a peripheral (PE) to said physical interface (IP), a mapping of the radio communications quality on said radio interface (IR) is determined, and then this mapping determined is compared with another mapping of the radio communications quality on said radio interface (IR) in the absence of a peripheral (PE) connected to said physical interface (IP), and in case of degradation of said radio communications quality resulting from said connection, a first on-going operating configuration of said radio interface (IR) as a function of said determined mapping or a second on-going operating configuration of said physical interface (IP) is modified.

2. The method according to claim 1, **characterised in that** said modifying the first configuration is selected from a group comprising changing radio channel and changing radio band.

3. The method according to claim 2, **characterised in that** in said step, in case it is impossible to change a radio channel used, it is determined whether it is possible to conduct a change in a radio band used, and if yes, this radio band change is conducted.

4. The method according to one of claims 1 to 3, **characterised in that** said modifying the second configuration is selected from a group comprising restraining said physical interface (IP) and disabling said physical interface (IP).

5. The method according to claim 4, **characterised in that** in said step, in the presence of said degradation, of an impossibility to modify said first configuration and of an operating priority of said radio interface (IR), first said physical interface (IP) is restrained, and if this does not allow said radio communications quality to be improved, said physical interface (IP) is disabled.

6. The method according to one of claims 1 to 5, **characterised in that** an operating priority of said radio interface (IR) or said physical interface (IP) is selected by a user of said communicating equipment (EC) before said connection of the peripheral (PE) to said physical interface (IP).

7. The method according to one of claims 1 to 6, **characterised in that** before said step, said mapping of the radio communications quality on said radio interface (IR) is determined in the absence of peripheral (PE) connected to said physical interface (IP).

8. A computer program product comprising a set of instructions which, when run by processing means, is capable of implementing the method according to one of claims 1 to 7 to manage at least one radio interface (IR) and at least one physical interface (IP) of a communicating equipment (EC).

9. A device (DG) for managing at least one radio interface (IR) and at least one physical interface (IP) of a communicating equipment (EC), **characterised in that** it comprises analysing means (MA) capable, in case of a connection of a peripheral (PE) to said physical interface (IP), of determining a mapping of the radio communications quality on said radio interface (IR), and processing means (MT) capable of comparing said determined mapping with another mapping of the radio communications quality on said radio interface (IR) in the absence of a peripheral (PE) connected to said physical interface (IP), and, in case of degradation of said radio communications quality resulting from said connection, of triggering a modification of a first on-going operating configuration of said radio interface (IR) as a function of said mapping determined or a second on-going operating configuration of said physical interface (IP).

10. A communicating equipment (EC) comprising at least one radio interface (IR) and at least one physical interface (IP), **characterised in that** it further comprises a management device (DG) according to claim 9.
